Europäisches Patentamt

European Patent Office

Office européen des brevets

(19)

(11) Veröffentlichungsnummer: **0 000 512**
**B1**

(12) **EUROPÄISCHE PATENTSCHRIFT**

(21) Anmeldenummer: **78100383.5**

(22) Anmeldetag: **12.07.78**

(51) Int. Cl.³: **B 01 F 7/24,**
**B 01 F 15/00//C 08 F 2/34**

(54) Frei tragender Wendelrührer.

(30) Priorität: **21.07.77 DE 7722777 U**

(43) Veröffentlichungstag der Anmeldung:
**07.02.79 Patentblatt 79/3**

(45) Bekanntmachung des Hinweises auf die Patenterteilung:
**28.01.81 Patentblatt 81/4**

(84) Benannte Vertragsstaaten:
**BE DE FR GB**

(56) Entgegenhaltungen:
**DE - A - 1 442 688**
**DE - A - 1 507 505**
**DE - B - 1 218 265**
**DE - C - 131 726**
**DE - A - 3 920 223**

(73) Patentinhaber: **BASF Aktiengesellschaft**
**Carl-Bosch-Strasse 38**
**D-6700 Ludwigshafen (DE)**

(72) Erfinder: **Lenart, Wolfgang**
**An der Froschlache 23**
**D-6700 Ludwigshafen (DE)**
(72) Erfinder: **Rau, Wolfgang, Dr.**
**Turnerstrasse 161**
**D-6900 Heidelberg (DE)**
(72) Erfinder: **Baron, Hubertus, Dr.**
**An der Froschlache 3**
**D-6700 Ludwigshafen (DE)**

Courier Press, Leamington Spa, England.

# Frei tragender Wendelrührer

Die Erfindung bezieht sich auf einen frei tragenden Wendelrührer zum Durchmischen von pulverförmigen Schüttgütern, mit mehreren aus Hohlprofilen bestehenden Wendelwindungen, deren unteres, dem Boden des Rührbehälters zugewandtes Ende, in eine Nabe übergeführt ist, einer von der Nabe ausgehenden und senkrecht auf der ersten Wendelwindung stehenden Verteilerspirale, die, im Bereich des Überganges von der Nabe zu ersten Windung der Wendel, um die Nabe angeordnet ist, sowie einer nach unten, durch den Boden des Rührbehälters führenden Antriebswelle, auf der die Nabe aufsitzt.

Die Durchmischung eines in vertikalen zylindrischen Behältern bewegten Schüttgutes mittels Wendelrührer hängt im wesentlichen von der Anzahl der Wendelwindungen, der Wendelsteigung, der Wendelbreite, der Drehzahl des Rührers und der Art des Schüttgutes ab. Der im Rührbett von Schüttgut bedeckte Wendelrührer bewirkt eine Vertikalumwälzung des Feststoffes, wobei das Schüttgut außen nach oben in der Bettmitte nach unten gefördert wird. Schwierig sind Misch und Rührvorgänge in Pulverschichten insbesondere dann durchzuführen, wenn ständig pulverförmiges Produkt durch Polymerisation aus der Gasphase nachgebildet wird, wie es beispielsweise bei der kontinuierlichen Gasphasen-Polymerisation von Propylen und Äthylen der Fall ist. Bei diesen Verfahren muß durch städige Umwälzung des gesamten Pulverbettes eine gute Verteilung von Katalysator, monomerem Gas und Kühlgas gewährleistet sein, so daß keine lokalen Überhitzungen auftreten. Diese Würden zum Schmelzen und Sintern des Produktpulvers führen und damit zu Störungen im Produktionsablauf durch Produktansätze an der Behälterwand, am Rührer und durch Agglomerate im Schüttgutbett.

Zur Darstellung der Erfindungs-Gattung ist von einem bekannten Wendelrührer im Sinne der DE—PS 12 18 265 ausgegangen, mit dem bisher bei kleineren Reaktoren ein störungsfrier Polymerisationsablauf möglich war. Beim Übergang auf größere Polymerisationsreaktoren, beispielsweise > 10 m³ Inhalt, hat es sich jedoch gezeigt, daß solche Rührer für einen störungsfreien Dauerbetrieb nicht in jeder Hinsicht befriedigen. Insbesondere im Bereich der Rührernabe und des Leitbleches ergeben sich Produktansätze, die sich gelegentlich ablösen und beim Produktaustrag aus dem Reaktor zu Verstopfungen und damit zu Produktionsunterbrechungen führen. Es sind außerdem größere Produktknollen zu beobachten, die offenbar zwischen Reaktorboden und dem Produktaufnahmebereich des Rührers entstehen. Auch am im Schüttbett getauchten Rührerende kommt es zu Produktansätzen. Diese Erscheinungen sind auf ungenügende oder gestörte Mischverhältnisse zurückzuführen und haben primär im Nabenbereich des Rührers, in dem die Umlenkung des umzuwälzenden Schüttgutes erfolgt, ihre Ursache, da dort die Strömungsverhältnisse durch komplexe Druck- und Scherspannungen negativ beeinflußt werden. Besonders gravierend sind diese Nachteile, wenn dem Reaktor entlang der Rührwelle über einen Spaltring z.B. Äthylen oder Propylen zur Polymerisation und gleichzeitigen Wärmeabfuhr zugeführt wird. Die geforderte gleichmäßige Gasverteilung des am Reaktorboden eintretenden Gases, das beispielsweise im Falle von Äthylen oder Propylen ganz oder teilweise verflüssigt sein kann und zur Polymerisation und Wärmeabfuhr gleichmäßig über das Schüttgut verteilt werden muß um Konzentrationsunterschiede weitgehend auszugleichen und lokale Überhitzungen zu verhindern, ist bei dem bekannten Wendelrührer nicht gewährleistet.

Es war daher Aufgabe der Erfindung, einen frei tragenden Wendelrührer so zu gestalten, daß die vorgenannten Nachteile nicht auftreten können.

Diese Aufgabe wurde erfindungsgemäß dadurch gelöst, daß die Verteilerspirale zwischen Nabe und erster Windung der Wendel waagerecht angeordnet ist, welche einen entlang der Rührerwelle in den Rührbehälter geführten Frisch- und Kühlgasstrom umlenkt und verteilt. Der Anschluß zwischen Wendel und Nabe ist dabei so gestaltet, daß auf der Lee-Seite des Anschlusses keine strömungslosen Zonen entstehen.

In einer bevorzugten Ausführungsform des erfindungsgemäßen Wendelrührers ist auf der Nabe ein asymmetrisch ausgebildeter Kegel angebracht, der die dort auftretende kritische Strömungszone durch seine Exzentrizität in positivem Sinne beeinflußt, indem er die dort sich ausbildende Rühezone stört und damit störende Agglomerate verhindert.

Nach einem weiteren vorteilhaften Merkmal der der Erfindung verjüngt sich die Wendel an ihrem freien Ende keilförmig nach außen. Durch diese Maßnahme wird die Ausbildung einer Wirbelschleppe bzw. Lockerstelle an dem durch die Pulverschicht gleitenden Rührerende ausgeschaltet, so daß Produktansätze, die vorzugsweise in solchen Bereichen entstehen, vermieden werden.

Es wurde des weiteren gefunden, daß reine Hohlprofile als Wendelquerschnitt, gleich welcher Art von Querschnittsgestaltung, bei Rührergrößen etwa ab 1 400 mm Außendurchmesser und Rührerwellendrehmomenten ab 800 daNm, die besonders hinsichtlich Beul-Steifigkeit des außerdem durch kurzfristige Druckunterschiede von mindestens 25 bar beaufschlagten Rührers, den Anforderungen eines freitragenden Wendelrührers nicht mehr genügen. Dieser Nachteil wird in einer weiteren Ausbildung der Erfindung dadurch umgangen, daß der hohle Wendelquerschnitt mit Schottblechen versehen ist, welche etwa im Abstand einer Wendelblattbreite angebracht sind. Diese Möglichkeit ergibt sich durch segmentförmigen Aufbau der Wendel, d.h., die Wendel besteht aus aneinandergereihten Kastenabschnitten.

Auf diese Weise ausgebildete Wendel ermöglichen den Einsatz in besonders großen Rührbehältern. So konnte beispielsweise bei einem frei tragenden Wendelrührer mit einem Außendurchmesser D von 2 650 mm, einer Seigung S von 1 000 mm, 3,75 Windungen und einer Blattbreite b von 400 mm selbst bei Rührerwellendrehmomenten von 6 000 daNm außerordentliche Formstabilität festgestellt werden. Mit Blechen einer Dicke von 12 bis 14 mm ist dabei ein vergleichsweise leichter Wendelrührer herstellbar, der zudem den Vorteil geringer Beanspruchung durch Trägheitskräfte aufweist.

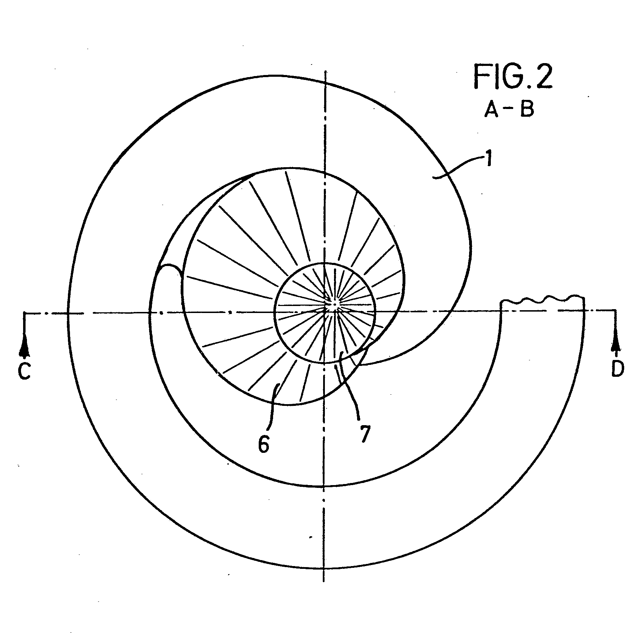

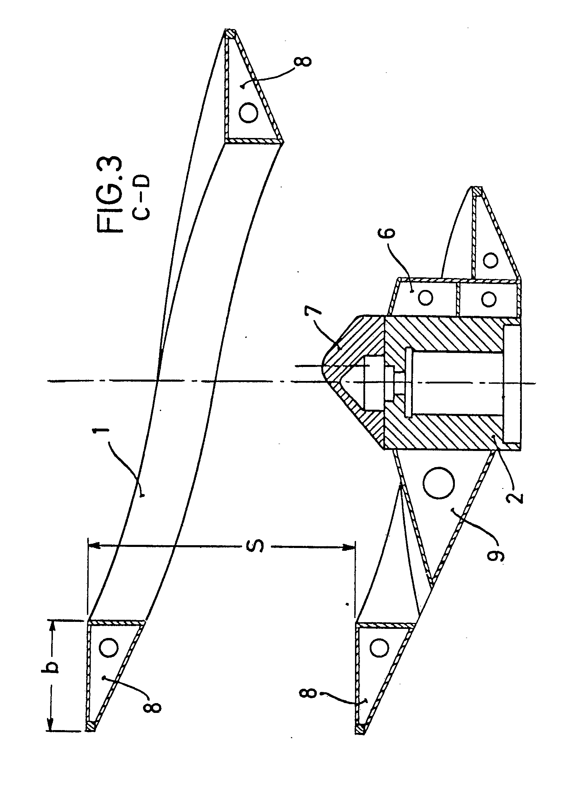

Eine beispielhafte Ausführungsform des erfindungsgemäßen Wendelrührers ist in den Zeichnungen — Figur 1 bis Figur 3 — schematisch dargestellt und im folgenden näher erläutert.

Es zeigt

Figur 1 den in einen Rührbehälter eingebauten Rührer

Figur 2 eine Draufsicht des in Figur 1 dargestellten Wendelrührers in der Ebene A—B und

Figur 3 ein Seitenansicht in der Ebene C—D.

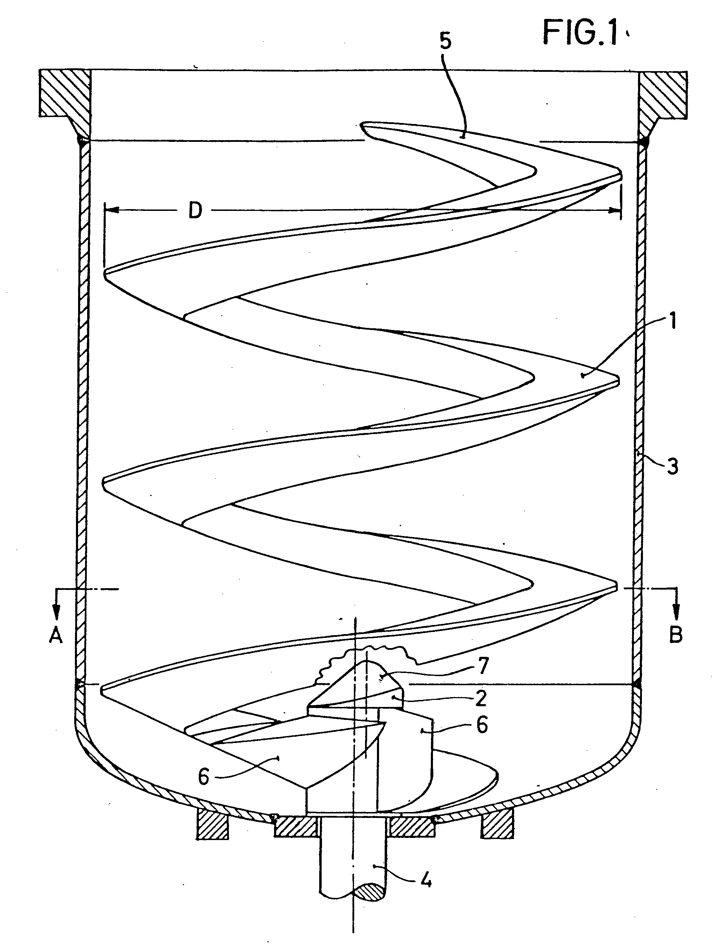

Gemäß Figur 1 ist der Rührer in Form einer frei tragenden Wendel 1 mit mehreren, vorteilhaft 3 bis 5 Windungen ausgebildet, die an ihrem unteren Ende über eine Verteilerspirale 6 in eine Nabe 2 übergeführt ist.

Die Verteilerspirale dient der Umlenkung des senkrecht nach oben gerichteten, in einem zwischen Rührerwelle 4 und Rührerwellenbohrung befindlichen Spalt eintretenden Frisch- und Kühlgasstromes und dessen sofortiger Verteilung über den gesamten Querschnitt des Behälters 3. Sie besteht zweckmäßigerweise aus einem entgegen der Drehrichtung sich verjüngenden dreieckförmigen Hohlprofil und ist zwischen Nabe 2 und der ersten Windung der Wendel 1 etwa waagerecht um die Nabe geführt.

Die Nabe 2 ist mit einem asymmetrischen Kegel 7 versehen, dessen Exzentrizität vorteilhaft etwa dem halben Wellendurchmesser entspricht. Hierdurch werden Produktanwachsungen in dieser strömungsarmen Zone wirksam verhindert.

Mit 5 ist der freie Wendelauslauf bezeichnet, dessen nach außen über einen Bereich von 90 bis 120°C sich verjüngender Querschnitt einen wirbelfreien Strömungsverlauf an der Bettoberfläche bewirkt und damit ebenfalls Anwachsungen entgegenwirkt. Durch Schottbleche 8, welche an ihren Stirnseiten allseitig mit den entsprechenden Profilwänden verschweißt sind, erhält die Wendel 1 zusätzlich eine außerordentliche Beul-Festigkeit, insbesondere bei extremen Belastungen, wie Druckwechsel bei raschen Entspannvorgängen. Gegebenenfalls können auch Schottbleche 9 in der Verteilerspirale angebracht sein, wodurch der Wendelrührer insgesamt an Stabilität gewinnt.

## Patentansprüche

1. Frei tragender Wendelrührer zum Durchmischen von pulverförmigen Schüttgütern, mit mehreren aus Hohlprofilen bestehenden Wendelwindungen, deren unteres, dem Boden des Rührbehälters zugewandtes Ende in eine Nabe übergeführt ist, einer von der Nabe ausgehenden und senkrecht auf der ersten Wendelwindung stehenden Verteilerspirale, die, im Bereich des Überganges von der Nabe zur ersten Windung der Wendel, um die Nabe angeordnet ist, sowie einer nach unten, durch den Boden des Rührbehälters führenden Antriebswelle, auf der die Nabe aufsitzt, dadurch gekennzeichnet, daß die Verteilerspirale (6) zwischen Nabe (2) und erster Windung der Wendel (1) waagrecht angeordnet ist, welche einen entlang der Rührerwelle (4) in den Rührbehälter geführten Frisch- und Kühlgasstrom umlenkt und verteilt.

2. Wendelrührer nach Anspruch 1, dadurch gekennzeichnet, daß ein asymmetrisch ausgebildeter Kegel (7) auf der Nabe (2) angebracht ist.

3. Wendelrührer nach den Ansprüchen 1 und 2, dadurch gekennzeichnet, daß sich die Wendel (1) an ihrem freien Ende keilförmig nach außen verjüngt.

4. Wendelrührer nach den Ansprüchen 1 bis 3, dadurch gekennzeichnet, daß der Wendelquerschnitt mit Schottblechen (8) versehen ist, welche etwa im Abstand einer Wendelbreite angebracht sind.

## Claims

1. A spiral stirrer, unsupported at one end, for mixing powdered bulk solids, comprising a plurality of spiral turns consisting of hollow profiles, the lower end of the spiral, facing the bottom of the stirred vessel, being attached to a hub, a distributor spiral arranged around the hub in the region of transition from the hub to the first turn of the spiral, and a drive shaft which passes down through the bottom of the stirred vessel and on which the hub is seated, characterized in that the distributor spiral (6) is arranged horizontally between the hub (2) and the first turn of the spiral (1), which distributor spiral deflects and disperses a stream of fresh gas and cooling gas introduced into the stirred vessel along the stirrer shaft (4).

2. A spiral stirrer as claimed in claim 1, characterized in that an asymmetric cone (7) is mounted on the hub (2).

3. A spiral stirrer as claimed in claim 1 or 2, characterized in that the spiral (1) tapers outward in a wedge-like manner at its free end.

4. A spiral stirrer as claimed in any one of claims 1 to 3, characterized in that the spiral cross-section is provided with bulkhead plates (8) which are located at intervals corresponding approximately to the width of the spiral blade.

**Revendications**

1. Agitateur hélicoïdal à extrémité libre pour le mélange de produits pulvérulents en vrac, comprenant plusieurs tours ou spires d'hélice formés de profilés creux, dont l'extrémité inférieure tournée vers le fond du récipient d'agitation constitue un moyeu, une spirale de répartition partant du moyeu et s'étendant perpendiculairement jusqu'au premier tour d'hélice, qui entoure le moyeu dans la zone allant du moyeu au premier tour de l'hélice, ainsi qu'un arbre d'entraînement dirigé vers le bas à travers le fond du récipient et sur lequel repose le moyeu, caractérisé par le fait que la spirale de répartition (6) est disposée horizontalement entre le moyeu (2) et le premier tour de l'hélice (1), et dévie et répartit le courant de gaz frais et de gaz de refroidissement dirigé le long de l'arbre de l'agitateur (4) dans le récipient d'agitation.

2. Agitateur hélicoïdal selon la revendication 1, caractérisé par le fait qu'un cône asymétrique (7) est monté sur le moyeu.

3. Agitateur hélicoïdal selon l'une des revendications 1 et 2, caractérisé par le fait que l'hélice (1), à son extrémité libre, s'amincit vers l'extérieur en forme de coin.

4. Agitateur hélicoïdal selon l'une des revendications 1 à 3, caractérisé par le fait que la section de l'helice est munie de cloisons de tôle (8) qui sont montées sensiblement dans une largeur d'hélice.

FIG.1

FIG.2
A - B

FIG.3
C-D